# EUROPÄISCHE PATENTANMELDUNG

(11) **EP 4 268 556 A1**
(43) Veröffentlichungstag der Anmeldung: **01.11.2023**
(21) Anmeldenummer: 23155759.6
(22) Anmeldetag: 09.02.2023
(51) Int. Cl.: A01B 69/04, A01D 41/127

(54) **VERFAHREN ZUR ÜBERWACHUNG AUTONOMER LANDWIRTSCHAFTLICHER ARBEITSMASCHINEN**

(30) Priorität: 27.04.2022 DE 102022110213
(71) Anmelder: CLAAS E-Systems GmbH, 49201 Dissen (DE)
(72) Erfinder: Mähler, Reinhold, 33378 Rheda-Wiedenbrück (DE); Ehlert, Christian, 33719 Bielefeld (DE); Bormann, Bastian, 33334 Gütersloh (DE); Baumgarten, Joachim, 48361 Beelen (DE); Neitemeier, Dennis, 59510 Lippetal (DE); Witte, Johann, 58730 Fröndenberg (DE); Redenius, Jannik, 32361 Pr. Oldendorf (DE); Bohl, Arne, 33330 Gütersloh (DE); Nacke, Dr., Eberhard, 33332 Gütersloh (DE); Apke, Christoph, 33659 Bielefeld (DE); Korthals, Timo, 33818 Leopoldshöhe (DE); Thiesmann, Waldemar, 49080 Osnabrück (DE); Schröder, Axel, 33332 Gütersloh (DE); Monkenbusch, Robin, 33378 Rheda-Wiedenbrück (DE)
(74) Vertreter: CLAAS Gruppe

(57) **Zusammenfassung**

Die Erfindung betrifft ein Verfahren zur Überwachung autonomer landwirtschaftlicher Arbeitsmaschinen (3), wobei die autonome landwirtschaftliche Arbeitsmaschine (3) eine landwirtschaftliche Arbeitsaufgabe autonom durchführt, wobei bei einem Auftreten einer Anomalie die autonome landwirtschaftliche Arbeitsmaschine (3) eine Reaktionsroutine durchführt, wobei die autonome landwirtschaftliche Arbeitsmaschine (3) in der Reaktionsroutine auf die Anomalie reagiert und die Durchführung der landwirtschaftlichen Arbeitsaufgabe unterbricht. Es wird vorgeschlagen, dass die autonome landwirtschaftliche Arbeitsmaschine (3) während und/oder nach der Reaktionsroutine sensorisch Anomaliedaten erfasst und in einer Melderoutine an ein Fernüberwachungszentrum (9) übermittelt, dass in dem Fernüberwachungszentrum (9) insbesondere ein Nutzer (10) auf die Anomaliedaten zugreift, dass in dem Fernüberwachungszentrum (9) eine Steueranweisung für die autonome landwirtschaftliche Arbeitsmaschine (3) zur weiteren Reaktion auf die Anomalie basierend auf den Anomaliedaten erzeugt und an die autonome landwirtschaftliche Arbeitsmaschine (3) übermittelt wird, dass die autonome landwirtschaftliche Arbeitsmaschine (3) die Steueranweisung ausführt und anschließend die Durchführung der landwirtschaftlichen Arbeitsaufgabe fortführt.

## Beschreibung

Die vorliegende Erfindung betrifft ein Verfahren zur Überwachung autonomer landwirtschaftlicher Arbeitsmaschinen gemäß dem Oberbegriff von Anspruch 1 sowie eine autonome landwirtschaftliche Arbeitsmaschine gemäß Anspruch 14 sowie eine Verwendung einer autonomen landwirtschaftlichen Arbeitsmaschine gemäß Anspruch 15.

Die vorliegend in Rede stehenden autonomen landwirtschaftlichen Arbeitsmaschinen wie autonome Mähdrescher, autonome Feldhäcksler, autonome Traktoren und autonome landwirtschaftliche Universal-Arbeitsmaschinen können mit üblichen Herausforderungen umgehen und landwirtschaftliche Arbeitsaufgaben weitgehend selbsttätig durchführen. Problematisch ist jedoch, dass sie nicht in allen unerwarteten Situationen ihre Arbeit fortsetzen können und auch in einigen erwarteten Situationen die einzige verfügbare Handlungsoption ein Stopp der autonomen landwirtschaftlichen Arbeitsmaschine ist. Das führt dazu, dass ein Nutzer die autonome landwirtschaftliche Arbeitsmaschine überwachen muss und einer der Hauptvorteile einer autonomen landwirtschaftlichen Arbeitsmaschine, ihre Autonomie, letztlich nicht vollständig realisiert wird.

Grundsätzlich sind Ansätze zur Überwachung oder Fernsteuerung von autonomen landwirtschaftlichen Arbeitsmaschine bekannt, diese lassen jedoch im Ergebnis noch viel Potenzial offen.

Es ist daher eine Herausforderung, autonome landwirtschaftliche Arbeitsmaschinen bezüglich ihrer Autonomie zu optimieren.

Das obige Problem wird durch die Merkmale des kennzeichnenden Teils von Anspruch 1 gelöst.

Wesentlich ist die grundsätzliche Überlegung, dass eine autonome landwirtschaftliche Arbeitsmaschine üblicherweise genügend Sensorik aufweist, damit ein Fernüberwachungszentrum nur aufgrund der Sensordaten entscheiden kann, wie auf eine Anomalie reagiert werden soll. Es reicht daher aus, wenn eine autonome landwirtschaftliche Arbeitsmaschine bei Vorliegen einer Anomalie selbsttätig eine Reaktionsroutine einleitet und anschließend die Entscheidung über das weitere Vorgehen an einen Nutzer oder eine stärkere Kl ausgelagert wird, der oder die nicht vor Ort sein muss. Es wird daher ein Fernüberwachungszentrum vorgeschlagen, an das die autonome landwirtschaftliche Arbeitsmaschine Sensordaten zu einer Anomalie überträgt und aus dem eine Steueranweisung generiert wird, wie die autonome landwirtschaftliche Arbeitsmaschine weiter verfahren soll.

Im Einzelnen wird vorgeschlagen, dass die autonome landwirtschaftliche Arbeitsmaschine während und/oder nach der Reaktionsroutine sensorisch Anomaliedaten erfasst und in einer Melderoutine an ein Fernüberwachungszentrum übermittelt, dass in dem Fernüberwachungszentrum eine Steueranweisung für die autonome landwirtschaftliche Arbeitsmaschine zur weiteren Reaktion auf die Anomalie basierend auf den Anomaliedaten erzeugt und an die autonome landwirtschaftliche Arbeitsmaschine übermittelt wird, dass die autonome landwirtschaftliche Arbeitsmaschine die Steueranweisung ausführt und anschließend die Durchführung der landwirtschaftlichen Arbeitsaufgabe fortführt.

Gemäß Anspruch 2 kann vorgesehen sein, dass die Überwachung mittels des Fernüberwachungszentrums als Dienstleistung freischaltbar ist. Dies ist eine einfache Art und Weise, die Fernüberwachung nach Bedarf anzubieten bzw. in Anspruch zu nehmen.

Bei einer Ausgestaltung gemäß Anspruch 3 ist vorgesehen, dass die autonome landwirtschaftliche Arbeitsmaschine in der Reaktionsroutine einen Notstopp durchführt und/oder, dass eine Anomalie, auf die die autonome landwirtschaftliche Arbeitsmaschine mit der Reaktionsroutine reagiert, ein Hindernis ist. Bei Hindernissen handelt es sich um die vermutlich häufigsten und gefährlichsten Anomalien, die bei der Durchführung einer landwirtschaftlichen Arbeitsaufgabe mittels einer autonomen landwirtschaftlichen Arbeitsmaschine auftreten können. Ein Notstopp ist aufgrund der Überwachung durch das Fernüberwachungszentrum in so gut wie jedem Fall eine akzeptable Notfalllösung, da mittels des Fernüberwachungszentrums anschließend entschieden werden kann, wie oder ob die landwirtschaftliche Arbeitsaufgabe fortgesetzt wird. Es ist daher unproblematisch, wenn ggf. häufiger als nötig ein Notstopp durchgeführt wird.

Anspruch 4 betrifft zwei Möglichkeiten, wie das Fernüberwachungszentrum im Zusammenspiel mit der autonomen landwirtschaftlichen Arbeitsmaschine vorgehen kann. Einerseits ist möglich, dass eine auszuführende Routine bereits auf der autonomen landwirtschaftlichen Arbeitsmaschine hinterlegt ist und diese lediglich ausgewählt und abgerufen werden muss, wodurch wenig Daten übertragen werden müssen, andererseits ist auch denkbar, dass die autonome landwirtschaftliche Arbeitsmaschine mittels des Fernüberwachungszentrums ferngesteuert wird.

In einer bevorzugten Ausgestaltung gemäß Anspruch 5 ist das Fernüberwachungszentrum eingerichtet, eine Vielzahl autonomer landwirtschaftlicher Arbeitsmaschinen zu überwachen. Auf diese Art und Weise wird eine einfache und effiziente Überwachung vieler autonomer landwirtschaftlicher Arbeitsmaschinen erzielt.

Besonders interessant ist nun die Möglichkeit gemäß Anspruch 6, dass ein KI-Modell, mittels dessen die autonomen landwirtschaftlichen Arbeitsmaschinen gesteuert wird, durch eine Verknüpfung der Anomaliedaten und der Steueranweisungen des Fernüberwachungszentrums als Reaktion auf die Anomalien nachtrainiert wird. So werden die autonomen landwirtschaftlichen Arbeitsmaschinen auf Basis realer Daten sukzessive verbessert.

Grundsätzlich kann zwischen zwei Konzepten autonomer landwirtschaftlicher Arbeitsmaschinen unterschieden werden. Die autonomen landwirtschaftlichen Arbeitsmaschinen können einerseits spezialisiert sein, wie es beispielsweise ein autonomer Mähdrescher oder gar ein autonomer Weizen-Mähdrescher wäre, oder andererseits generalisiert. Derartige generalisierte autonome landwirtschaftliche Arbeitsmaschinen als autonome landwirtschaftliche Universal-Arbeitsmaschinen stehen im Fokus einer Ausgestaltung gemäß Anspruch 7. Diese autonomen landwirtschaftlichen Universal-Arbeitsmaschinen zeichnen sich dadurch aus, dass sie durch wechselnde Konfigurationen wie wechselnde Arbeitsaggregate und wechselnde Softwarebausteine für eine Vielzahl unterschiedlicher landwirtschaftlicher Arbeitsaufgaben verwendet werden können.

Derartige autonome landwirtschaftliche Universal-Arbeitsmaschinen haben insbesondere entscheidende Vorteile hinsichtlich ihrer Auslastung und Anschaffungskosten, weisen jedoch den Nachteil auf, dass sie technisch, insbesondere softwareseitig, anspruchsvoller sind. Ein KI-Modell, das darauf trainiert ist, mit immer derselben technischen Ausstattung immer nur Weizen zu ernten, ist technisch einfacher realisierbar als ein KI-Modell, das jegliche landwirtschaftliche Arbeitsaufgabe mit beliebiger Ausstattung erledigen kann. Somit kann auch die Menge an Anomalien im Sinne von Zuständen bzw. Messwerten, die nicht erwartet wurden, bei einer autonomen landwirtschaftlichen Universal-Arbeitsmaschine ungleich größer sein, als bei einer autonomen Arbeitsmaschine, die exakt auf ihre jeweilige Tätigkeit angepasst ist. Daher ist auch der Bedarf nach einer Fernüberwachung bei autonomen landwirtschaftlichen Universal-Arbeitsmaschinen größer, womit die vorschlagsgemäße Lösung hier besonders vorteilhaft ist.

Anspruch 8 gibt bevorzugte Ausgestaltungen der Anomaliedaten an. Gemäß Anspruch 9 kann vorgesehen sein, dass der Nutzer im Fernüberwachungszentrum zusätzlich zu den Anomaliedaten auf weitere Daten einer Datenbank zugreifen kann. Diese Datenbank kann allgemeine Hintergrundinformationen wie Feldinformationsdaten oder Wetterdaten umfassen. Die Datenbank kann insbesondere Daten umfassen, die der autonomen landwirtschaftlichen Arbeitsmaschine nicht zugänglich sind.

Bei einer Ausgestaltung gemäß Anspruch 10 ist vorgesehen, dass die autonome landwirtschaftliche Arbeitsmaschine kontinuierlich Daten an das Fernüberwachungszentrum sendet. So kann der Nutzer im Fernüberwachungszentrum im Anomaliefall direkt auf eine große Menge aktueller und historischer Daten zugreifen. Außerdem wird eine Überwachung der autonomen landwirtschaftlichen Arbeitsmaschine auch anlasslos, beispielsweise stichprobenartig oder regelmäßig, ermöglicht. Alternativ kann vorgesehen sein, dass die autonome landwirtschaftliche Arbeitsmaschine nur Daten an das Fernüberwachungszentrum sendet, nachdem sie die Reaktionsroutine ausgelöst hat. So wird der Datenverkehr geringgehalten.

Sofern sich die Anomalie nicht aus der Ferne auflösen lässt, kann gemäß Anspruch 11 ein Servicetechniker entsendet werden.

Bei einer besonders bevorzugten Ausgestaltung gemäß Anspruch 12 überträgt im Falle einer Anomalie mindestens eine weitere landwirtschaftliche Arbeitsmaschine eines Verbundes landwirtschaftlicher Arbeitsmaschinen, in dem die autonome landwirtschaftliche Arbeitsmaschine arbeitet, Umfeldsensordaten an das Fernüberwachungszentrum, die die autonome landwirtschaftliche Arbeitsmaschine und/oder die direkte Umgebung abbilden. Dadurch kann der Nutzer im Fernüberwachungszentrum beispielsweise einen weiteren Blickwinkel auf ein Hindernis erhalten.

Anspruch 13 betrifft die Möglichkeit, dass das Fernüberwachungszentrum auch weitergehende Tätigkeiten neben der landwirtschaftlichen Arbeitsaufgabe überwacht und somit allgemein den Einsatz der autonomen landwirtschaftlichen Arbeitsmaschine überwacht und sicherstellt, dass diese ihrer Arbeit nachgeht.

Nach einer weiteren Lehre gemäß Anspruch 14, der eigenständige Bedeutung zukommt, wird eine autonome landwirtschaftliche Arbeitsmaschine eingerichtet zur Verwendung in dem vorschlagsgemäßen Verfahren beansprucht.

Auf alle Ausführungen zu dem vorschlagsgemäßen Verfahren darf verwiesen werden.

Nach einer weiteren Lehre gemäß Anspruch 15, der ebenfalls eigenständige Bedeutung zukommt, wird eine Verwendung einer autonomen landwirtschaftlichen Arbeitsmaschine in dem vorschlagsgemäßen Verfahren beansprucht.

Auf alle Ausführungen zu dem vorschlagsgemäßen Verfahren und der vorschlagsgemäßen autonomen landwirtschaftlichen Arbeitsmaschine darf verwiesen werden.

Im Folgenden wird die Erfindung anhand einer lediglich Ausführungsbeispiele darstellenden Zeichnung näher erläutert. In der Zeichnung zeigt
- Fig. 1: die Durchführung einer landwirtschaftlichen Arbeitsaufgabe,

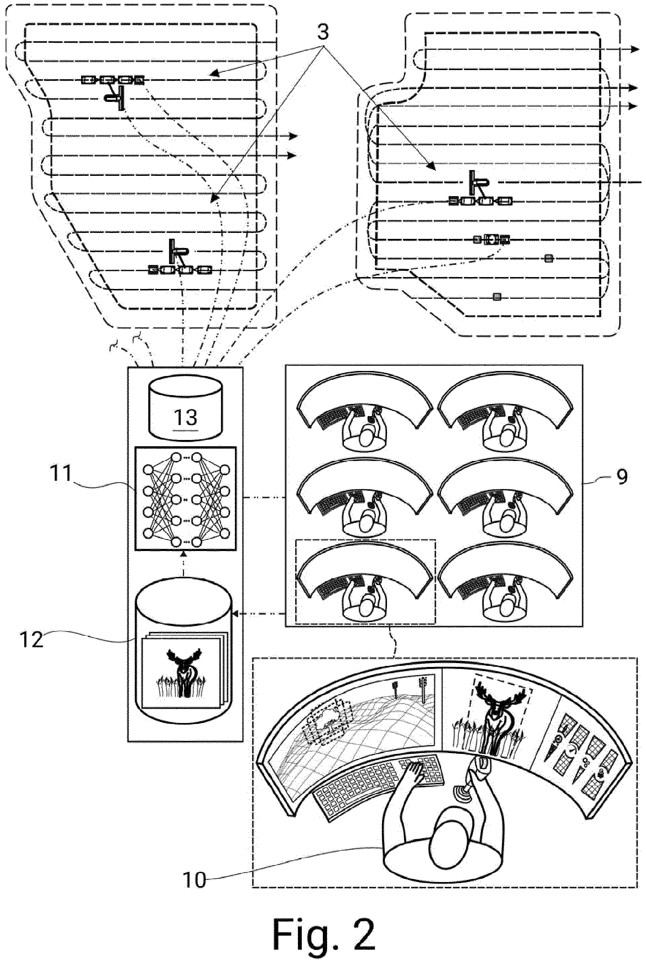

- Fig. 2: das Fernüberwachungszentrum im Einsatz und
- Fig. 3: zwei autonome landwirtschaftliche Universal-Arbeitsmaschinen, die als Feldhäcksler zusammenarbeiten.

Ein beispielhafter Anwendungsfall ist vorliegend ein Erntevorgang. Dieser Erntevorgang umfasst beispielhaft die Prozesskette aus den landwirtschaftlichen Arbeitsaufgaben "Abernten eines Feldbestandes" und "Bergung des Erntegutes".

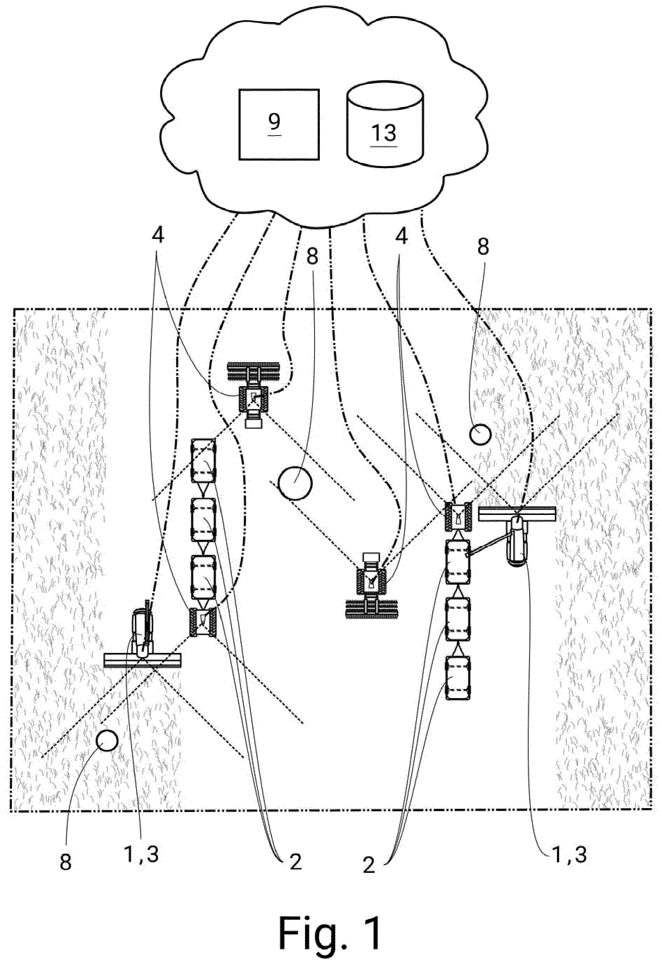

In der Regel wird diese Prozesskette so abgearbeitet, dass zunächst ein oder mehrere als Mähdrescher 1 ausgeführte landwirtschaftliche Arbeitsmaschinen den auf einer Anbaufläche gewachsenen Feldbestand abernten (Fig. 1). Beispielhaft wird der von den Fruchtständen gebildete Teil des Erntegutes auf dem Mähdrescher 1 in einem Korntank zwischengespeichert während der verbleibende Teil des Erntegutes, das Stroh, in Schwaden auf der Anbaufläche abgelegt wird. Hat das in Schwaden abgelegte Stroh einen die Einlagerung des Strohs zulassenden Feuchtegehalt erreicht, verpresst eine von einem Schlepper gezogene Ballenpresse das Stroh zu Erntegutballen, die zunächst auf der Anbaufläche abgelegt werden.

In einem weiteren Arbeitsgang der Prozesskette werden die Erntegutballen beispielsweise mittels sogenannter Hubstapler auf von Schleppern gezogene Pritschenanhänger verladen und zur Einlagerung abtransportiert. In analoger Weise werden die im Korntank zwischengespeicherten Fruchtstände von schleppergezogenen Transportanhängern 2 übernommen und zur Einlagerung oder Weiterverarbeitung geführt.

Im vorliegenden Fall können nun eine oder mehrere dieser Tätigkeiten von autonomen landwirtschaftlichen Arbeitsmaschinen 3, insbesondere autonomen landwirtschaftlichen Universal-Arbeitsmaschinen 4 in unterschiedlichen Konfigurationen, übernommen werden. Fig. 1 zeigt beispielsweise die Zusammenarbeit von vier autonomen landwirtschaftlichen Universal-Arbeitsmaschinen 4 und zwei autonomen Mähdreschern 1 bei der Ernte.

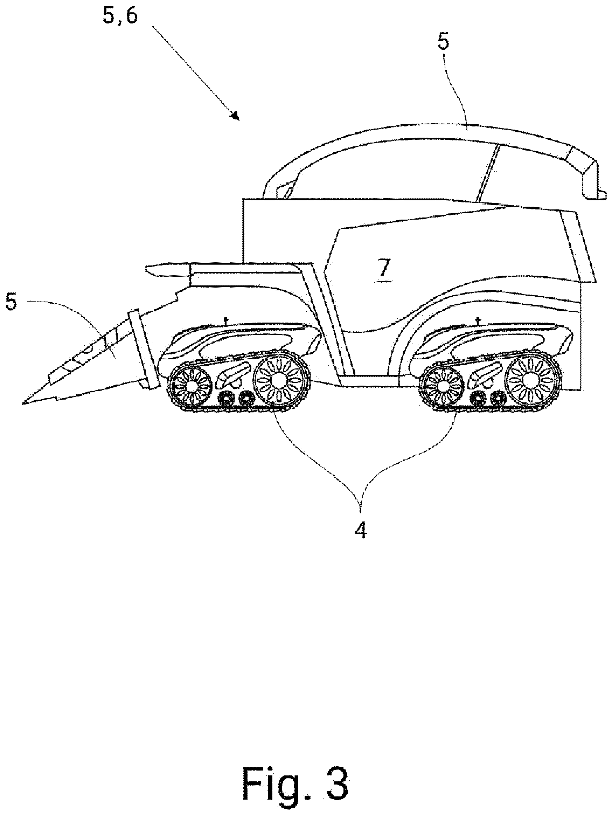

Alternativ ist auch denkbar, dass die autonomen landwirtschaftlichen Universal-Arbeitsmaschinen 4 durch Konfigurationsänderungen, also insbesondere durch Ausstattung mit entsprechenden Arbeitsaggregaten 5, als Feldhäcksler 6 verwendet werden. Denkbar ist beispielsweise, dass ein Rumpf-Feldhäcksler 7 als Arbeitsaggregat 5 mit wenig Elektronik und ohne Fahrantrieb mittels einer oder mehrerer autonomer landwirtschaftlicher Universal-Arbeitsmaschinen 4 betrieben wird, indem die autonomen landwirtschaftlichen Universal-Arbeitsmaschinen 4 als Fahrantrieb und Steuerung dienen und an den Rumpf-Feldhäcksler 7 andockbar sind (Fig. 3).

Vorgeschlagen wird nun ein Verfahren zur Überwachung autonomer landwirtschaftlicher Arbeitsmaschinen 3, wobei die autonome landwirtschaftliche Arbeitsmaschine 3 eine landwirtschaftliche Arbeitsaufgabe autonom durchführt, wobei bei einem Auftreten einer Anomalie die autonome landwirtschaftliche Arbeitsmaschine 3 eine Reaktionsroutine durchführt und wobei die autonome landwirtschaftliche Arbeitsmaschine 3 in der Reaktionsroutine auf die Anomalie reagiert und die Durchführung der landwirtschaftlichen Arbeitsaufgabe unterbricht.

Die Reaktionsroutine kann, wie noch erläutert wird, einen Not-Stopp der autonomen landwirtschaftlichen Arbeitsmaschine 3 umfassen und zusätzlich oder alternativ ein Verbringen von Arbeitsaggregaten 5 in einen sicheren Zustand umfassen. Trifft beispielsweise eine autonome landwirtschaftliche Universal-Arbeitsmaschine 4, die einen Transportanhänger 2 zieht, auf ein Hindernis 8, kann sie schlicht stehen bleiben. Problematisch ist dabei allerdings, dass sie regelmäßig keine Fähigkeiten aufweist, um ihr relativ unbekannte Transportanhänger 2 sicher um das Hindernis 8 zu manövrieren oder auch nur einzuschätzen, ob ein derartiges Manöver sicher und/oder angebracht ist.

Wesentlich ist nun, dass die autonome landwirtschaftliche Arbeitsmaschine 3 während und/oder nach der Reaktionsroutine sensorisch Anomaliedaten erfasst und in einer Melderoutine an ein Fernüberwachungszentrum 9 übermittelt, dass in dem Fernüberwachungszentrum 9 insbesondere ein Nutzer 10 auf die Anomaliedaten zugreift, dassin dem Fernüberwachungszentrum 9 eine Steueranweisung für die autonome landwirtschaftliche Arbeitsmaschine 3 zur weiteren Reaktion auf die Anomalie erzeugt und an die autonome landwirtschaftliche Arbeitsmaschine 3 übermittelt wird, dass die autonome landwirtschaftliche Arbeitsmaschine 3 die Steueranweisung ausführt und anschließend die Durchführung der landwirtschaftlichen Arbeitsaufgabe fortführt.

Grundsätzlich ist denkbar, dass ein Nutzer 10 in dem Fernüberwachungszentrum 9 auf die Anomaliedaten zugreift. Zusätzlich oder alternativ kann eine KI auf die Anomaliedaten zugreifen und die Steueranweisung erzeugen. Die KI kann die Steueranweisung direkt an die autonome landwirtschaftliche Arbeitsmaschine 3 übermitteln oder an den Nutzer 10, der diese bestätigen oder ändern kann. Es kann auch vorgesehen sein, dass einige Anomalien von dem Nutzer 10 bearbeitet werden und andere von der Kl. Dabei kann die KI beispielsweise auf Basis einer Sicherheit entscheiden, ob die Anomalie einem Nutzer 10 vorgelegt werden soll. So ergibt sich auch die Möglichkeit, in dem Fernüberwachungszentrum 9 eine performantere KI vorzuhalten, als auf der autonomen landwirtschaftlichen Arbeitsmaschine 3.

Somit kann der Nutzer 10 entscheiden, wie auf die Anomalie reagiert werden soll. Die weitere Durchführung der landwirtschaftlichen Arbeitsaufgabe ist selbstverständlich nicht in jedem Fall vorgesehen, sollte jedoch das üblicherweise angestrebte Ziel sein. Mittels des Fernüberwachungszentrums 9 wird ermöglicht, dass die autonome landwirtschaftliche Arbeitsmaschine 3 ohne lokale Überwachung die landwirtschaftliche Arbeitsaufgabe durchführen kann, ohne dass ihr Besitzer regelmäßig nach dem Rechten sehen oder bei Anomalien selbst ausrücken muss und ohne dass ihr Besitzer abends eine nicht fertiggestellte landwirtschaftliche Arbeitsaufgabe vorfindet.

Weiter ist hier und vorzugsweise vorgesehen, dass die Überwachung mittels des Fernüberwachungszentrums 9 als Dienstleistung mittels der autonomen landwirtschaftlichen Arbeitsmaschine 3, insbesondere über ein Terminal der autonomen landwirtschaftlichen Arbeitsmaschine 3, freischaltbar ist.

Die autonome landwirtschaftliche Arbeitsmaschine 3 kann so ohne Hardwareänderungen nach Bedarf in die Fernüberwachung eingebunden werden.

Die autonome landwirtschaftliche Arbeitsmaschine 3 führt vorzugsweise in der Reaktionsroutine einen Notstopp durch. Ein Notstopp kann einen Stopp einer Fahrbewegung und/oder eines Arbeitsaggregats 5 umfassen.

Eine Anomalie, auf die die autonome landwirtschaftliche Arbeitsmaschine 3 mit der Reaktionsroutine reagiert, kann ein Hindernis 8 sein. Da eine autonome landwirtschaftliche Arbeitsmaschine 3 im Zweifel eher ein nicht vorhandenes Hindernis 8 erkennen sollte, als ein vorhandenes Hindernis 8 nicht zu erkennen, können echte und unechte Hindernisse 8 regelmäßig auftreten. Gleichzeitig sind, jedenfalls vorher unbekannte, Hindernisse 8 auf einem Feld quasi per Definition unerwartet, wodurch damit zu rechnen ist, dass die landwirtschaftliche Arbeitsmaschine von ab und an nicht selbst mit den Fähigkeiten ausgestattet ist, auf das Hindernis 8 zu reagieren. Das Fernüberwachungszentrum 9 schafft hier auf einfache Art und Weise Abhilfe.

Weiter ist hier und vorzugsweise vorgesehen, dass die Steueranweisung eine Anweisung zum Starten einer vordefinierten, auf der autonomen landwirtschaftlichen Arbeitsmaschine 3 hinterlegten, Routine ist, und/oder, dass der Nutzer 10 und/oder die Kl mittels einer Vielzahl von Steueranweisungen die autonome landwirtschaftliche Arbeitsmaschine 3, insbesondere zum Umfahren des Hindernisses 8, fernsteuert.

Vorzugsweise sind Fernüberwachungszentrum 9 und autonome landwirtschaftliche Arbeitsmaschine 3 so ausgestaltet, dass der Nutzer 10 und/oder die KI nach Vorliegen der Anomalie eine vordefinierte Routine nutzen oder die autonome landwirtschaftliche Arbeitsmaschine 3 fernsteuern kann, insbesondere abhängig davon, ob eine der vordefinierten Routinen nach Einschätzung des Nutzers adäquat ist.

Eine bevorzugte Ausführungsform sieht vor, dass das Fernüberwachungszentrum 9 eine Vielzahl autonomer landwirtschaftlicher Arbeitsmaschinen 3 bei der Durchführung einer Vielzahl landwirtschaftlicher Arbeitsaufgaben überwacht, dass die Vielzahl autonomer landwirtschaftlicher Arbeitsmaschinen 3 Reaktionsroutinen und Melderoutinen bei Auftreten von Anomalien durchführt, dass das Fernüberwachungszentrum 9 auf Basis von Anomaliedaten der Vielzahl autonomer landwirtschaftlicher Arbeitsmaschinen 3 Steueranweisungen für die jeweilige autonome landwirtschaftliche Arbeitsmaschinen 3 erzeugt.

Aus Effizienzgründen ist also bevorzugt vorgesehen, dass das Fernüberwachungszentrum 9 viele autonome landwirtschaftliche Arbeitsmaschinen 3 vieler landwirtschaftlicher Betriebe und/oder Besitzer überwacht.

Weiter ist hier und vorzugsweise vorgesehen, dass die autonomen landwirtschaftlichen Arbeitsmaschinen 3 mittels eines Kl-Modells 11 gesteuert die landwirtschaftlichen Arbeitsaufgaben durchführen. Um dieses Kl-Modell 11 mit der Zeit zu verbessern, kann vorgesehen sein, dass die Anomaliedaten und die Steueranweisungen des Fernüberwachungszentrums 9 zu Trainingsdaten 12 verknüpft werden und dass das KI-Modell 11 auf Basis der verknüpften Trainingsdaten 12 nachtrainiert wird. Zusätzlich oder alternativ kann auf diese Weise die KI in dem Fernüberwachungszentrum 9 nachtrainiert werden.

Im Ergebnis lernt also beispielsweise die autonome landwirtschaftliche Arbeitsmaschine 3, vorzugsweise indirekt beispielsweise über Softwareupdates, aus vergangenen Reaktionen des Nutzers 10 auf Anomalien, insbesondere aus einer Vielzahl Reaktionen bei einer Vielzahl Anomalien, die bei einer Vielzahl autonomer landwirtschaftlicher Arbeitsmaschinen 3 aufgetreten sind. Diese Variante wird interessanter, je mehr autonome landwirtschaftliche Arbeitsmaschinen 3 das Fernüberwachungszentrum 9 überwacht.

Weiter kann vorgesehen sein, dass die autonome landwirtschaftliche Arbeitsmaschine 3 eine autonome landwirtschaftliche Universal-Arbeitsmaschine 4 ist, oder, dass die Vielzahl autonomer landwirtschaftlicher Arbeitsmaschinen 3 autonome landwirtschaftliche Universal-Arbeitsmaschinen 4 sind.

Jede autonome landwirtschaftliche Universal-Arbeitsmaschine 4 ist zur Verrichtung einer Vielzahl unterschiedlicher landwirtschaftlicher Arbeitsaufgaben konfigurierbar ist, indem sie mit wechselnden Arbeitsaggregaten 5 ausgestattet wird.

Bei einer autonomen landwirtschaftlichen Universal-Arbeitsmaschine 4 handelt es sich um eine Arbeitsmaschine, die autonom, also ohne engmaschige Nutzerüberwachung 10 und auf Basis eigener Aktionen eine landwirtschaftliche Arbeitsaufgabe ausführen kann. Hier handelt es sich bei der autonomen landwirtschaftlichen Universal-Arbeitsmaschine 4 um eine unbemannte Arbeitsmaschine. Sie kann alleine oder im Verbund tätig sein.

Weiterhin ist die autonome landwirtschaftliche Universal-Arbeitsmaschine 4 zur Durchführung einer Vielzahl unterschiedlicher landwirtschaftlicher Arbeitsaufgaben konfigurierbar, insbesondere durch den Austausch bzw. das Anbringen von Arbeitsaggregaten 5.

Vorzugsweise kann vorgesehen sein, dass bei einer autonomen landwirtschaftlichen Universal-Arbeitsmaschine 4 bei einem Wechsel des Arbeitsaggregats 5 zusätzlich ein Wechsel von Steuerungsbaugruppen erfolgt, die das Arbeitsaggregat 5 betreffen, oder, dass Steuerungsbaugruppen hinzugefügt werden. Auch möglich ist, dass zwei oder mehr als zwei autonome landwirtschaftliche Universal-Arbeitsmaschinen 4 gemeinsam ein Arbeitsaggregat 5 betreiben (Fig. 3), also dass beispielsweise zwei autonome landwirtschaftliche Universal-Arbeitsmaschinen 4 zusammen mit einer größeren Tragstruktur mit diversen Arbeitsaggregaten 5 als Feldhäcksler 6, Mähdrescher 1 oder anderes fungieren.

Hier und vorzugsweise ist vorgesehen, dass die autonome landwirtschaftliche Universal-Arbeitsmaschine 4 oder die autonomen landwirtschaftlichen Universal-Arbeitsmaschinen 4 mittels Prozesswissens für ihre jeweilige landwirtschaftliche Arbeitsaufgabe individualisiert werden.

Derartiges Prozesswissen kann optimierte Einstellungen von Maschinenparametern und/oder Parametrisierungen von Softwaremodulen und/oder Gewichte von neuronalen Netzwerken und/oder eine Routenplanung und/oder eine Optimierungsstrategie oder dergleichen umfassen. Die spezifischen Prozessdaten umfassen beispielsweise Feldinformationsdaten wie eine Fruchtart eines Feldbestandes und/oder eine Bodenart und/oder eine Bodensteigung und/oder feldunabhängige Prozessdaten wie vorhandene Betriebsmittel und/oder vorhergehende und/oder nachfolgende Arbeitsschritte. Die allgemeinen Prozessdaten umfassen unspezifische Prozessdaten wie beispielsweise optimierte Einstellungen der autonomen landwirtschaftlichen Universal-Arbeitsmaschine 4 für einen Erntevorgang. Umweltdaten sind solche Daten, die nicht direkt das Feld betreffen, sondern allgemein eine größere Umgebung, beispielsweise Wetterdaten, Temperaturdaten und dergleichen. Das Prozesswissen wird von der autonomen landwirtschaftlichen Universal-Arbeitsmaschine 4 zur Durchführung der landwirtschaftlichen Arbeitsaufgabe genutzt, insbesondere nutzt die autonome landwirtschaftliche Universal-Arbeitsmaschine 4 das Prozesswissen, um damit Maschinenparameter einzustellen.

Hier und vorzugsweise umfasst das Prozesswissen zumindest für einige, vorzugsweise für alle, Arbeitsaggregate 5, mit denen die autonome landwirtschaftliche Universal-Arbeitsmaschine 4 ausgerüstet werden kann, arbeitsaggregatspezifisches Arbeitsaggregatwissen 5. Hier und vorzugsweise ist es dann so, dass die autonome landwirtschaftliche Universal-Arbeitsmaschine 4 für einige oder alle Arbeitsaggregate 5, mit denen sie ausgerüstet werden kann, jedenfalls in einer Grund- oder Werkskonfiguration, kein arbeitsaggregatspezifisches Arbeitsaggregatwissen 5 aufweist. Alternativ kann die autonome landwirtschaftliche Universal-Arbeitsmaschine 4 für einige oder alle Arbeitsaggregate 5, mit denen sie ausgerüstet werden kann, jedenfalls in der Grund- oder Werkskonfiguration, arbeitsaggregatstypspezifisches Arbeitsaggregatwissen 5 aufweisen. So kann die autonome landwirtschaftliche Universal-Arbeitsmaschine 4 beispielsweise einen grundsätzlichen Satz an pflugspezifischem Arbeitsaggregatwissen 5 aufweisen, jedoch von einer externen Quelle für die individuelle landwirtschaftliche Arbeitsaufgabe mit Arbeitsaggregatwissen 5 betreffend den exakten Pflugtyp ausgestattet werden, das eine effizientere Verwendung des Pfluges erlaubt.

Vorzugsweise ist daher vorgesehen, dass die autonome landwirtschaftliche Universal-Arbeitsmaschine 4 derart ausgestaltet ist, dass sie ohne das arbeitsaggregatspezifische Arbeitsaggregatwissen 5 das jeweilige Arbeitsaggregat 5 nicht oder nur auf Basis des arbeitsaggregatstypspezifischen Arbeitsaggregatwissen 5 verwenden kann.

Bei den Maschinenparametern kann es sich um Maschinenparameter im engen Sinne wie die Motordrehzahl oder eine Position einer Drosselklappe handeln. Ebenso sind Einstellungen eines Heckkrafthebers oder dergleichen umfasst. Die Maschinenparameter können auch Anweisungen an Einstellautomaten oder andere Steuerungssysteme der autonomen landwirtschaftlichen Universal-Arbeitsmaschine 4 umfassen, aus denen dann Maschinenparameter im engen Sinne generiert werden.

Hier und vorzugsweise hat der Nutzer 10 und/oder die KI im Fernüberwachungszentrum 9 Zugriff auf das Prozesswissen oder einen Teil des Prozesswissens.

Weiter ist hier und vorzugsweise vorgesehen, dass die Anomaliedaten Umfelddaten und/oder Maschinendaten und/oder eine Fahrroute und/oder Arbeitsaggregatdaten der autonomen landwirtschaftlichen Arbeitsmaschine 3 und/oder GPS-Daten der autonomen landwirtschaftlichen Arbeitsmaschine 3 umfassen.

Zusätzlich oder alternativ kann der Nutzer 10 und/oder die KI im Fernüberwachungszentrum 9 auf weitere, die landwirtschaftliche Arbeitsaufgabe und/oder die autonome landwirtschaftliche Arbeitsmaschine 3 und/oder die Umgebung der autonomen landwirtschaftlichen Arbeitsmaschine 3 betreffende Daten zugreifen, die in einer Datenbank 13 des Fernüberwachungszentrums 9 hinterlegt sind, wobei die weiteren Daten vorzugsweise Umweltdaten, insbesondere Wetterdaten, und/oder Feldinformationsdaten umfassen.

Die Wetterdaten und/oder die Feldinformationsdaten können dem Fernüberwachungszentrum 9 von einem Farm Management Information System oder dergleichen zur Verfügung gestellt werden.

Weiter ist hier und vorzugsweise vorgesehen, dass die autonome landwirtschaftliche Arbeitsmaschine 3 kontinuierlich außerhalb der Reaktionsroutine während der Durchführung der landwirtschaftlichen Arbeitsaufgabe Daten an das Fernüberwachungszentrum 9 sendet und/oder in einer Cloud, insbesondere des Farm Management Information Systems, abspeichert, oder, dass die autonome landwirtschaftliche Arbeitsmaschine 3 nur Daten an das Fernüberwachungszentrum 9 sendet, nachdem sie die Reaktionsroutine ausgelöst hat.

Es kann vorgesehen sein, dass der Nutzer 10 und/oder die KI im Fernüberwachungszentrum 9 einen lokalen Servicetechniker entsendet, wenn die Anomalie als Störung identifiziert wird, und/oder, dass der Nutzer 10 und/oder die KI im Fernüberwachungszentrum 9 einen lokalen Servicetechniker entsendet, wenn eine Datenverbindung mit der autonomen landwirtschaftlichen Arbeitsmaschine 3 für mindestens einen definierten Zeitraum abbricht.

Das Fernüberwachungszentrum 9 kann dafür eine Auflistung von Servicetechnikern haben und gegebenenfalls deren Auslastung kennen. Es wird vorzugsweise im Regelfall der Servicetechniker involviert, der sich am nächsten zum Feld befindet. Auch eine Priorisierung zum Beispiel nach Dringlichkeit oder wirtschaftlichem Schaden der Anomalie ist möglich.

Weiter ist hier und vorzugsweise vorgesehen, dass die landwirtschaftliche Arbeitsaufgabe von einem Verbund landwirtschaftlicher Arbeitsmaschinen durchgeführt wird, dass mindestens eine andere landwirtschaftliche Arbeitsmaschine Umfeldsensordaten an das Fernüberwachungszentrum 9 überträgt, nachdem die autonome landwirtschaftliche Arbeitsmaschine 3 die Reaktionsroutine ausgelöst hat, dass die Umfeldsensordaten die autonome landwirtschaftliche Arbeitsmaschine 3 und/oder deren direkte Umgebung abbilden.

Unter einem Verbund wird eine miteinander kooperierende und kommunizierende Gruppe landwirtschaftlicher Arbeitsmaschinen verstanden. Reichen die Sensordaten der autonomen landwirtschaftlichen Arbeitsmaschine 3 zum Verständnis der Anomalie nicht aus, kann der Nutzer 10 und/oder die KI im Fernüberwachungszentrum 9 aktiv Umfeldsensorik anderer landwirtschaftlicher Arbeitsmaschinen in der Umgebung der autonomen landwirtschaftlichen Arbeitsmaschine 3 abfragen. Alternativ können die Daten der Umfeldsensorik automatisch an das Fernüberwachungszentrum 9 übertragen werden, insbesondere ausgelöst durch eine Kommunikation der autonomen landwirtschaftlichen Arbeitsmaschine 3 in der Reaktionsroutine an den Verbund.

Es kann auch vorgesehen sein, dass das Fernüberwachungszentrum 9 die landwirtschaftliche Arbeitsaufgabe und eine Vorbereitung und/oder Anfahrt und/oder Nachbereitung überwacht.

Beansprucht wird außerdem gemäß einer weiteren Lehre, der eigenständige Bedeutung zukommt, eine autonome landwirtschaftliche Arbeitsmaschine 3 eingerichtet zur Verwendung in dem vorschlagsgemäßen Verfahren.

Auf alle Ausführungen zu dem vorschlagsgemäßen Verfahren darf verwiesen werden.

Beansprucht wird außerdem gemäß einer weiteren Lehre, der eigenständige Bedeutung zukommt, eine Verwendung einer autonomen landwirtschaftlichen Arbeitsmaschine 3 in dem vorschlagsgemäßen Verfahren.

Auf alle Ausführungen zu dem vorschlagsgemäßen Verfahren darf verwiesen werden.

### Bezugszeichenliste

- 1: Mähdrescher
- 2: Transportanhänger
- 3: autonome landwirtschaftliche Arbeitsmaschine
- 4: Universal-Arbeitsmaschine
- 5: Arbeitsaggregat
- 6: Feldhäcksler
- 7: Rumpf-Feldhäcksler
- 8: Hindernis
- 9: Fernüberwachungszentrum
- 10: Nutzer
- 11: KI-Modell
- 12: Trainingsdaten
- 13: Datenbank

## Patentansprüche

1. Verfahren zur Überwachung autonomer landwirtschaftlicher Arbeitsmaschinen (3), wobei die autonome landwirtschaftliche Arbeitsmaschine (3) eine landwirtschaftliche Arbeitsaufgabe autonom durchführt, wobei bei einem Auftreten einer Anomalie die autonome landwirtschaftliche Arbeitsmaschine (3) eine Reaktionsroutine durchführt, wobei die autonome landwirtschaftliche Arbeitsmaschine (3) in der Reaktionsroutine auf die Anomalie reagiert und die Durchführung der landwirtschaftlichen Arbeitsaufgabe unterbricht,
**dadurch gekennzeichnet,**
**dass** die autonome landwirtschaftliche Arbeitsmaschine (3) während und/oder nach der Reaktionsroutine sensorisch Anomaliedaten erfasst und in einer Melderoutine an ein Fernüberwachungszentrum (9) übermittelt, dass in dem Fernüberwachungszentrum (9) insbesondere ein Nutzer (10) auf die Anomaliedaten zugreift, dass in dem Fernüberwachungszentrum (9) eine Steueranweisung für die autonome landwirtschaftliche Arbeitsmaschine (3) zur weiteren Reaktion auf die Anomalie basierend auf den Anomaliedaten erzeugt und an die autonome landwirtschaftliche Arbeitsmaschine (3) übermittelt wird, dass die autonome landwirtschaftliche Arbeitsmaschine (3) die Steueranweisung ausführt und anschließend die Durchführung der landwirtschaftlichen Arbeitsaufgabe fortführt.

2. Verfahren nach Anspruch 1, **dadurch gekennzeichnet, dass** die Überwachung mittels des Fernüberwachungszentrums (9) als Dienstleistung mittels der autonomen landwirtschaftlichen Arbeitsmaschine (3), insbesondere über ein Terminal der autonomen landwirtschaftlichen Arbeitsmaschine (3), freischaltbar ist.

3. Verfahren nach Anspruch 1 oder 2, **dadurch gekennzeichnet, dass** die autonome landwirtschaftliche Arbeitsmaschine (3) in der Reaktionsroutine einen Notstopp durchführt, und/oder, dass eine Anomalie, auf die die autonome landwirtschaftliche Arbeitsmaschine (3) mit der Reaktionsroutine reagiert, ein Hindernis (8) ist.

4. Verfahren nach einem der vorhergehenden Ansprüche, **dadurch gekennzeichnet, dass** die Steueranweisung eine Anweisung zum Starten einer vordefinierten, auf der autonomen landwirtschaftlichen Arbeitsmaschine (3) hinterlegten, Routine ist, und/oder, dass der Nutzer (10) mittels einer Vielzahl von Steueranweisungen die autonome landwirtschaftliche Arbeitsmaschine (3), insbesondere zum Umfahren des Hindernisses (8), fernsteuert.

5. Verfahren nach einem der vorhergehenden Ansprüche, **dadurch gekennzeichnet, dass** das Fernüberwachungszentrum (9) eine Vielzahl autonomer landwirtschaftlicher Arbeitsmaschinen (3) bei der Durchführung einer Vielzahl landwirtschaftlicher Arbeitsaufgaben überwacht, dass die Vielzahl autonomer landwirtschaftlicher Arbeitsmaschinen (3) Reaktionsroutinen und Melderoutinen bei Auftreten von Anomalien durchführt, dass das Fernüberwachungszentrum (9) auf Basis von Anomaliedaten der Vielzahl autonomer landwirtschaftlicher Arbeitsmaschinen (3) Steueranweisungen für die jeweilige autonome landwirtschaftliche Arbeitsmaschinen (3) erzeugt.

6. Verfahren nach Anspruch 5, **dadurch gekennzeichnet, dass** die autonomen landwirtschaftlichen Arbeitsmaschinen (3) mittels eines Kl-Modells (11) gesteuert die landwirtschaftlichen Arbeitsaufgaben durchführen, dass die Anomaliedaten und die Steueranweisungen des Fernüberwachungszentrums (9) zu Trainingsdaten (12) verknüpft werden, dass das KI-Modell (11) auf Basis der verknüpften Trainingsdaten (12) nachtrainiert wird.

7. Verfahren nach einem der vorhergehenden Ansprüche, **dadurch gekennzeichnet, dass** die autonome landwirtschaftliche Arbeitsmaschine (3) eine autonome landwirtschaftliche Universal-Arbeitsmaschine (4) ist, oder, dass die Vielzahl autonomer landwirtschaftlicher Arbeitsmaschinen (3) autonome landwirtschaftliche Universal-Arbeitsmaschinen (4) sind, dass jede autonome landwirtschaftliche Universal-Arbeitsmaschine (4) zur Verrichtung einer Vielzahl unterschiedlicher landwirtschaftlicher Arbeitsaufgaben konfigurierbar ist, indem sie mit wechselnden Arbeitsaggregaten (5) ausgestattet wird.

8. Verfahren nach einem der vorhergehenden Ansprüche, **dadurch gekennzeichnet, dass** die Anomaliedaten Umfelddaten und/oder Maschinendaten und/oder eine Fahrroute und/oder Arbeitsaggregatdaten der autonomen landwirtschaftlichen Arbeitsmaschine (3) und/oder GPS-Daten der autonomen landwirtschaftlichen Arbeitsmaschine (3) umfassen.

9. Verfahren nach einem der vorhergehenden Ansprüche, **dadurch gekennzeichnet, dass** der Nutzer (10) im Fernüberwachungszentrum (9) auf weitere, die landwirtschaftliche Arbeitsaufgabe und/oder die autonome landwirtschaftliche Arbeitsmaschine (3) und/oder die Umgebung der autonomen landwirtschaftlichen Arbeitsmaschine (3) betreffende Daten zugreifen kann, die in einer Datenbank (13) des Fernüberwachungszentrums (9) hinterlegt sind, vorzugsweise, dass die weiteren Daten Umweltdaten, insbesondere Wetterdaten, und/oder Feldinformationsdaten umfassen.

10. Verfahren nach einem der vorhergehenden Ansprüche, **dadurch gekennzeichnet, dass** die autonome landwirtschaftliche Arbeitsmaschine (3) kontinuierlich außerhalb der Reaktionsroutine während der Durchführung der landwirtschaftlichen Arbeitsaufgabe Daten an das Fernüberwachungszentrum (9) sendet und/oder in einer Cloud abspeichert, oder, dass die autonome landwirtschaftliche Arbeitsmaschine (3) nur Daten an das Fernüberwachungszentrum (9) sendet, nachdem sie die Reaktionsroutine ausgelöst hat.

11. Verfahren nach einem der vorhergehenden Ansprüche, **dadurch gekennzeichnet, dass** der Nutzer (10) im Fernüberwachungszentrum (9) einen lokalen Servicetechniker entsendet, wenn die Anomalie als Störung identifiziert wird, und/oder, dass der Nutzer (10) im Fernüberwachungszentrum (9) einen lokalen Servicetechniker entsendet, wenn eine Datenverbindung mit der autonomen landwirtschaftlichen Arbeitsmaschine (3) für mindestens einen definierten Zeitraum abbricht.

12. Verfahren nach einem der vorhergehenden Ansprüche, **dadurch gekennzeichnet, dass** die landwirtschaftliche Arbeitsaufgabe von einem Verbund landwirtschaftlicher Arbeitsmaschinen durchgeführt wird, dass mindestens eine andere landwirtschaftliche Arbeitsmaschine Umfeldsensordaten an das Fernüberwachungszentrum (9) überträgt, nachdem die autonome landwirtschaftliche Arbeitsmaschine (3) die Reaktionsroutine ausgelöst hat, dass die Umfeldsensordaten die autonome landwirtschaftliche Arbeitsmaschine (3) und/oder deren direkte Umgebung abbilden.

13. Verfahren nach einem der vorhergehenden Ansprüche, **dadurch gekennzeichnet, dass** das Fernüberwachungszentrum (9) die landwirtschaftliche Arbeitsaufgabe und eine Vorbereitung und/oder Anfahrt und/oder Nachbereitung überwacht.

14. Autonome landwirtschaftliche Arbeitsmaschine eingerichtet zur Verwendung in dem Verfahren nach einem der Ansprüche 1 bis 13.

15. Verwendung einer autonomen landwirtschaftlichen Arbeitsmaschine (3) in dem Verfahren nach einem der Ansprüche 1 bis 13.
